# EUROPEAN PATENT APPLICATION

(11) **EP 2 128 540 A1**
(43) Date of publication of application: **02.12.2009**
(21) Application number: 08718463.6
(22) Date of filing: 05.02.2008
(51) Int. Cl.: F24J 2/54, F24J 2/38

(54) **TWO-AXIS HYDRAULIC SOLAR TRACKER**

(30) Priority: 09.02.2007 ES 200700357
(71) Applicant: Consejo Superior de Investigaciones Cientificas (CSIC), 28006 Madrid (ES); Multimedia Productos Y Servicios S.l., 29002 Málaga (ES)
(72) Inventor: GUINEA DÍAZ, Domingo, E-28500 Arganda del Rey (ES); VILLANUEVA MARTÍNEZ, Eugenio, E-28500 Arganda del Rey (ES); MARTÍN GÓMEZ, David, E-2800 Arganda del Rey (ES); GARCÍA-ALEGRE SÁNCHEZ, María Carmen, E-28500 Arganda del Rey (ES)
(74) Representative: Pons Ariño, Angel
(86) International application number: PCT/ES2008/070016
(87) International publication number: WO 2008/096029

(57) **Abstract**

Two-axis hydraulic solar tracker for orientation and tracking of trajectory in solar collector panels providing an increase in energy capture of between 30 and 40% compared to fixed panels. Said tracker is hydraulically operated, with no type of electric or reducing motor, all movements thereof produced by three hydraulic cylinders. The movement mechanism used means that the tracker can be made with very light materials, compounds materials made of thermostable resins and glass fibre.

## Description

### FIELD OF THE INVENTION

Energy sector, electrical energy production by photovoltaic panels with a solar tracker.

### STATE OF THE ART

The orientation of the photovoltaic panels perpendicular to the sun provides greater output than its fixing with a static support structure. The considerable current cost of these energy capture devices and conversion into electricity justifies the greater complexity and prices of these moving support structures. In the simplest case, they are provided with a daily east-west movement which is based on an axis with a determined inclination, being that corresponding to the elevation angle (N-S orientation) which depends on the area's latitude, whilst the movement of the azimuth angle (E-W orientation) is almost always achieved with an electrical-mechanical operation. (ES 1 061 033 U: Single axis solar tracker).

Most of these trackers are driven by two gear motors which allow movements operated with electric motors. (ES 1 058 985 U: Tracker mounted on a post moved by two gear motors.)

Given the absolute regularity of the solar displacement, the tracker positioning can be controlled in open loop with trajectory predetermined by a clock included in the control system, predetermined in a fixed movement throughout each day of the year, or in a closed loop by angular position coders or light sensors of the sun position with respect to the panel.

Other solar tracker patents:
- ES 1 060 949 U: Tracker that cleans the solar panels with water.
- ES 1 050 814 U: Two-axis tracker, constituted by a moving platform and the shutter type movement of the panels.

There are multiple trackers on the market:
- Aesol: Markets Buskil K6 solar trackers which allow east-west tracking with precision. It is based on a single column which facilitates its fast installation and minimal maintenance.
- ADES: Manufactures four models of solar trackers for powers between 7 and 17 Kw.
- Dobon's Technology: TETRA-TRACK® is a range of two-axis solar trackers. The system is composed of a platform reinforced with semicircular arcs, which rests and rotates on the upper corner of the bedplate in the form of tetrahedron. The platform has own movement in the east-west axis and the bedplate provides the north-south movement.
- Ecotécnia-Solon AG: The photovoltaic generator has a two-axis tracking system which considerably improves energy production.
- Array Technologies-Energés: they offer horizontal axis trackers (HZ Trackers). Only one gear motor moves the assembly formed by a series of interconnected sections.
- Energética Energietechnik: Tracks the sun automatically or semiautomatically. This system does not need a two-axis tracking system. It is a type of "blind" system on which various elements are mounted all connected through a guide rod, with the aid of an electric motor the modules are accurately oriented. It is not necessary to perform daily system adjustments, although it is necessary to adjust it in the different seasons of the year.
- Instalaciones Pevafersa: it has several models of two-axis rotatory platform of up to 10 kW power.
- Isofotón: also performs others areas of activity in this solar energy market, including solar tracking technology.
- Kipp&Zonen: The heart of the Solar Tracking System of the firm Kipp&Zonen is a totally automatic, high-precision solar tracking system. With this equipment, all measuring equipment installed in the station can be correctly oriented to the sun or kept in the shade, in accordance with its needs.
- Pairan Elektronik: it has the SunFlex two-axis solar tracking system.
- Poulek Solar: The Traxle solar tracker is a structure formed by aluminium and anti-corrosive steel profiles, whereon the photovoltaic panels are mounted.

### DESCRIPTION OF THE INVENTION

### BRIEF DESCRIPTION OF THE INVENTION

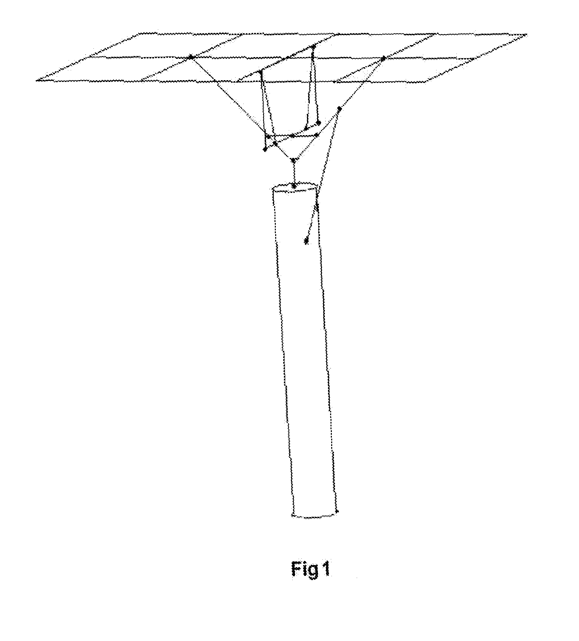

It consists of a two-axis solar tracker for orientation and tracking of trajectory in solar collector panels providing an increase in energy capture of between 30 and 40% compared to fixed panels. Said tracker is hydraulically operated, with no type of electric or gear motor, all movements thereof are produced by three hydraulic cylinders placed in the arrangement shown in figure 1.

This device can be part of an assembly in a field of trackers so that, since the movement speed is very slow the pump has a small capacity, the same hydraulic system can be used (motor pump unit) to move several trackers.

The movement mechanism used means that this tracker can be made with very light materials, composite materials made of thermostable resins and glass fibre. These profiles are used as substitutes for traditional materials such as galvanized steel, painted or stainless, aluminium and concrete which are used in other trackers.

This type of composite material has substantial advantages compared with the traditional ones as regards versatility, functionality, ease of assembly and lack of maintenance, and we can forget the problem of corrosion. All of this together with the use of hydraulic cylinders and the possibility of either using a single pump for a single system or for several, makes this system a cheap, low weight solution, which facilitates its installation.

### DETAILED DESCRIPTION OF THE INVENTION

Two-axis hydraulic solar tracker for orientation and tracking of trajectory in solar collector panels providing an increase in energy capture of between 30 and the 40% compared to fixed panels. This tracker is hydraulically operated, with no type of electric or gear motor, all movements thereof are produced by three hydraulic cylinders placed in the arrangement shown in figure 1.

The movement mechanism used means that this tracker can be made with very light materials, composite materials made of thermostable resins and glass fibre.

This device can be part of an assembly in a field of trackers so that, since the movement speed is very slow the pump has a small capacity, the same hydraulic system can be used (motor pump unit) to move several trackers.

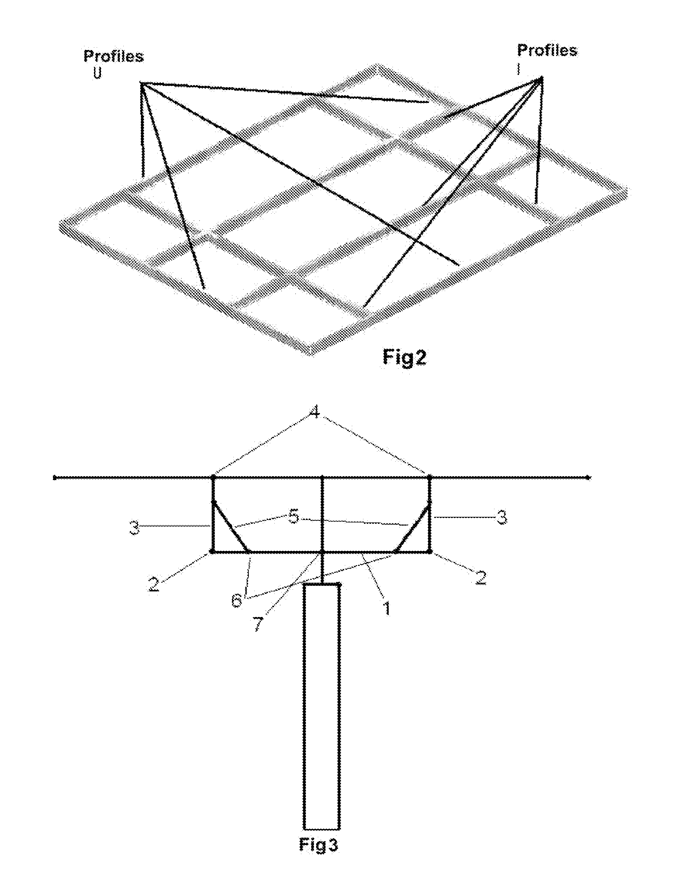

As previously mentioned, it is a hydraulically operated two-axis tracker. It is structurally composed of three parts:
- The support frame of the collector panels (fig. 2)
- The movement system with two-axis rotation using three cylinders.
- The carrying and anchoring base in the ground.

The structure support of the panels (fig. 2) shall have suitable dimensions for the number of panels one wants to place, in any case, it is formed by metal or synthetic composite profiles joined by the suitable fixing system. The dimensions of these profiles shall be those required to support the panel weight and the stress caused by the wind at a maximum limit speed in the installation area.

The movement structure shall also be composed of the same steel or resin material, in this case, square tubes can be used, of suitable dimensions for the number of panels. This system can also be separated in two modules, module A allows the movement of the tracker in accordance with east-west orientation, and module B allows us the north-south orientation.

Module A (fig. 3) is formed by a long central profile (1) with two ball joints of one degree of freedom (2) at its ends wherein another two profiles (3) are coupled which are smaller and identical to one another, which shall be coupled to the panel support structure thanks to another two ball joints of a shaft (4). In the ball joints between these last profiles and the panel support structure is also coupled the end of two of the cylinders (5), which will allow us to move the parallelepiped by rotation of its four vertices, whilst in the two points situated in the first profile the other end shall be placed together with a ball joint of a shaft (6). Furthermore, in the middle point of this last central profile a piece (7) is placed with a bore and a friction bearing or bushing which shall enable the east-west rotation. In this way, module A shall be defined.

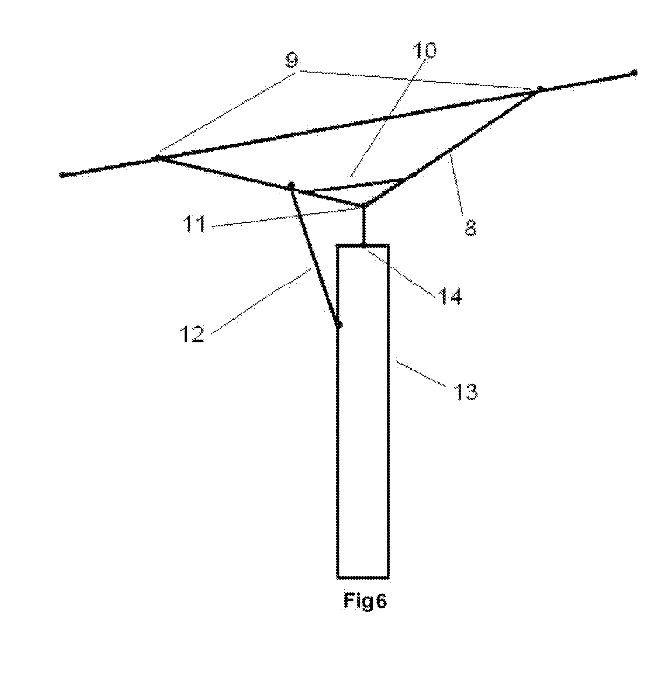

Module B (fig. 6) is formed by a structure which has a V-shape composed of two profiles (8) of identical length, joined by one of their ends, whilst the other end shall be joined to the panel support structure by ball joints of one degree of freedom (9). This structure is also formed by a solid shaft (10) which is joined to the two profiles which will be whereby this module B is joined to module A through the piece with the bearing, and which would allow the relative movement between the two modules, which are situated in two perpendicular planes.

In module B, in the joining point of the two profiles which form the V, another piece (11) is positioned, also bored where it shall be joined to the support structure of the tracker by a shaft. And on one of these profiles a ball joint of a shaft is placed wherein the end of the other cylinder (12) shall be coupled that is lacking which will enable the north-south movement, whose other end is assembled to the tracker support structure. The movement structure shall thus be defined.

The tracker support structure (fig. 6) is formed by a round tube (13) or by a lattice tower of the necessary height according to the dimensions of the upper platform and the obstacles and shadows of the surroundings, at whose upper end a ball joint (14) is placed which will join module B and this part, joined by a shaft or pin. At a certain point is also placed a support with a ball joint for the placement of the end of the cylinder. The other end of the tower is anchored to the ground.

### EXAMPLE OF EMBODIMENT OF THE INVENTION

To complement the description being made and in order to aid towards a better understanding of the characteristics of the invention, a set of drawings is attached to the present specification, as an integral part thereof, wherein the following has been represented with illustrative and non-limitative character:
- figure 1.- General perspective view of the tracker, where all components thereof are observed
- figure 2.- Perspective view of the collector support structure.
- figure 3.- Front view of the movement structure in E-W direction, which has been called, module A, wherein the elements that compose it are observed.

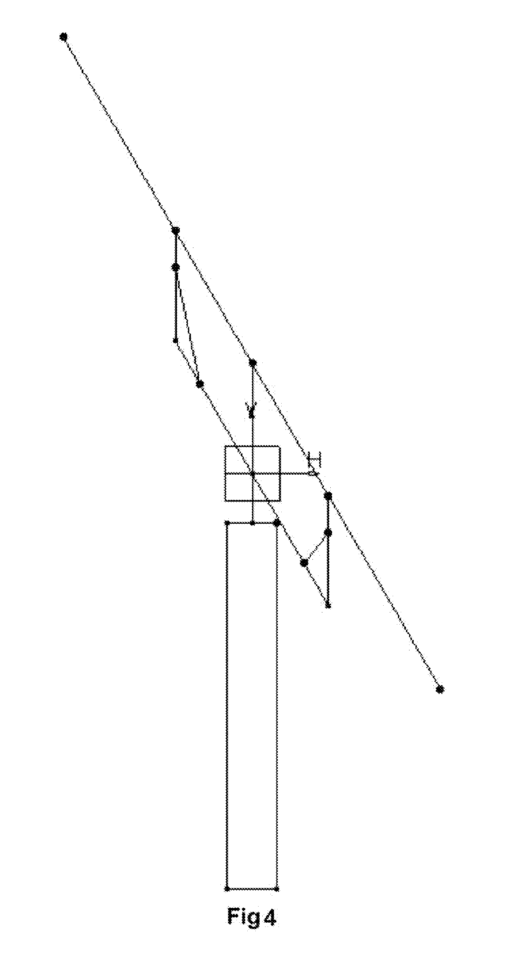

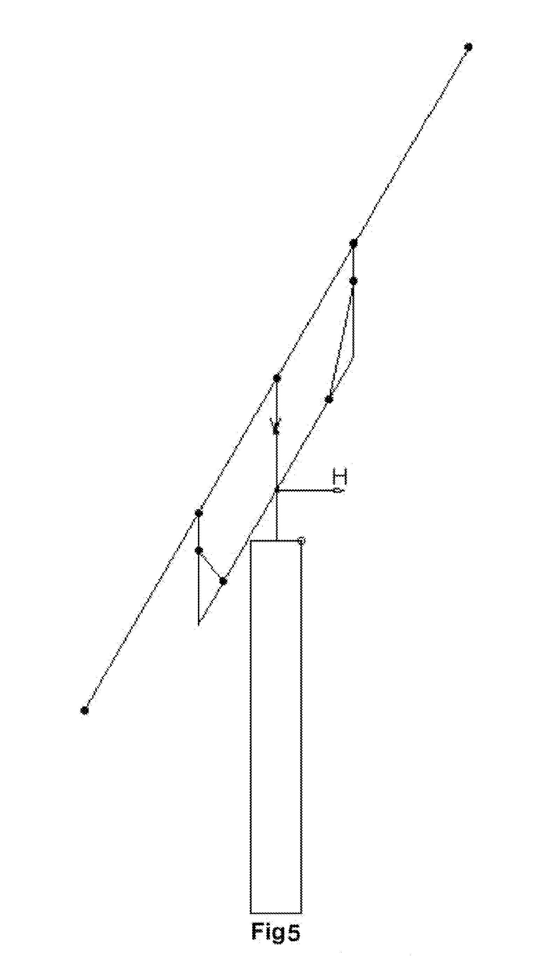

- figures 4 and 5.- Front view of module A in its end positions oriented towards the east and west respectively.
- figure 6.- Side view of the movement structure in N-S direction, which has been called module B, wherein the elements that compose it are observed.

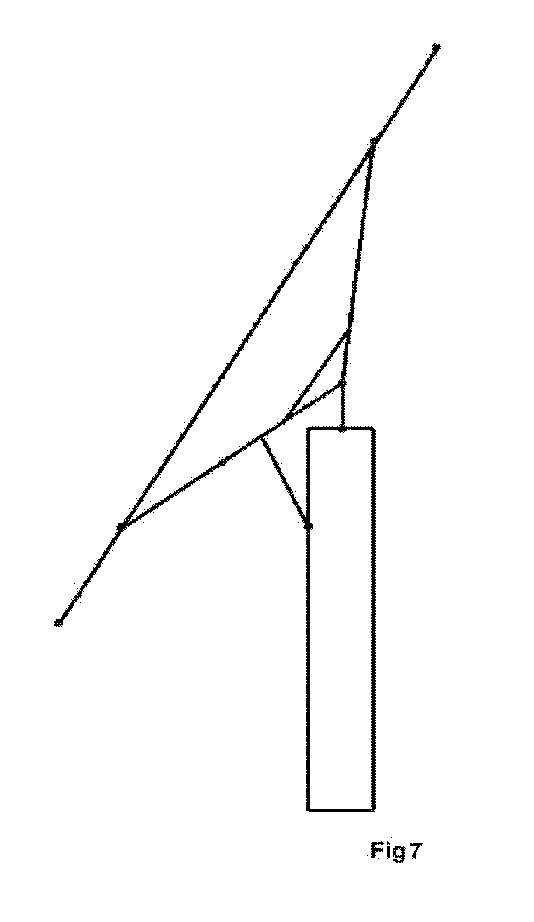

- figure 7.- Front view of module B in its endmost position.

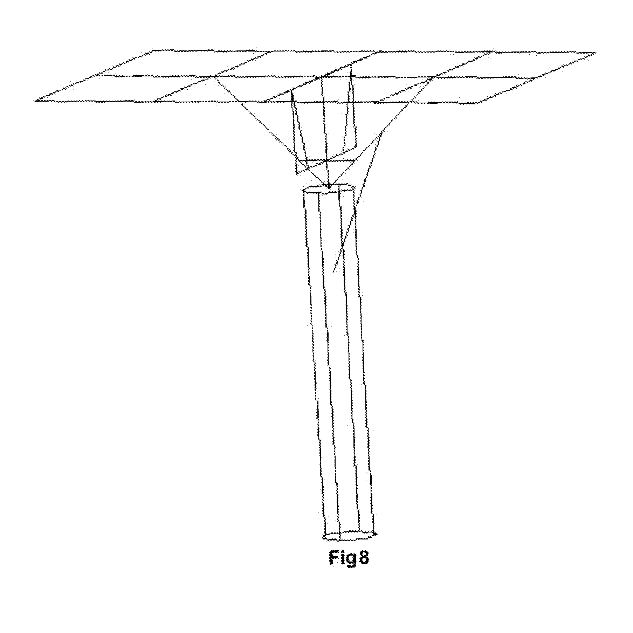

- figure 8 - Schematic diagram of the complete tracker

## Claims

1. Two-axis hydraulic solar tracker, composed of three structures:
• the support frame of the collector panels
• the movement system with two-axis rotation using three cylinders
• the carrying and anchoring base in the ground,
**characterized in that** it is totally hydraulically operated

2. Two-axis hydraulic solar tracker totally hydraulically operated in accordance with claim 1 **characterized in that** it uses light materials, without maintenance and resistant to corrosion

3. Two-axis hydraulic solar tracker totally hydraulically operated in accordance with claim 1, **characterized in that** the support is distributed on four ball joints of simple effect each one of them, an articulated parallelepiped support providing orientation in one of the axes.

4. Two-axis hydraulic solar tracker in accordance with claim 1 to 3, **characterized in that** as it uses light materials it enables the use of a low power hydraulic pump, with single hydraulic system for several trackers.

5. Two-axis hydraulic solar tracker according to claim 1 to 4, **characterized in that** the solar tracking is performed in two axes perpendicular to one another due to the articulated parallelepiped support.

6. Two-axis hydraulic solar tracker according to the preceding claims, **characterized in that** it has solar tracking controlled by an on-board processor, in charge of managing all the information supplied to it by the sensors for the suitable positioning perpendicular to the incident solar energy.

7. Two-axis hydraulic solar tracker according to the preceding claims, **characterized in that** it incorporates a real-time clock with the purpose of calculating the solar coordinates at all times.

8. Two-axis hydraulic solar tracker according to the preceding claims, **characterized in that** it incorporates an energy diagnosis and supervision module.

9. Two-axis hydraulic solar tracker according to the preceding claims, **characterized in that** it has network connection with a remote supervision and security system.
